# EUROPÄISCHE PATENTSCHRIFT

(11) **EP 1 894 716 B1**
(45) Veröffentlichungstag und Bekanntmachung des Hinweises auf die Patenterteilung: **10.11.2010**
(21) Anmeldenummer: 06119897.4
(22) Anmeldetag: 31.08.2006
(51) Int. Cl.: B32B 27/32, H01G 4/30, H01B 3/44

(54) **Biaxial orientierte Elektroisolierfolie**
Biaxially oriented, electrically insulating film
Film electro-isolant à orientation biaxiale

(43) Veröffentlichungstag der Anmeldung: 05.03.2008
(73) Patentinhaber: Treofan Germany GmbH & Co.KG, 66539 Neunkirchen (DE)
(72) Erfinder: Busch, Detlef ,Treofan Germany GmbH & Co. KG, 66740, Saarlouis (DE); Mohr, Thilo, Treofan Germany GmbH & Co. KG, 66424, Homburg (DE)

(56) Entgegenhaltungen:
- EP-A2- 0 909 638
- DE-A1- 10 300 146
- JP-A- 2006 063 186
- US-A1- 2004 171 782

## Beschreibung

Die Erfindung betrifft eine Polypropylenfolie mit verbesserten Eigenschaften für die Verwendung als Elektroisolierfolie in Kondensatoren.

EP-A-0 776 926 beschreibt eine biaxial orientierte Folie für die Kondensator-anwendung, welche bei 120°C in Längs- und Querrichtung einen Gesamtschrumpf von 1-4% aufweist. Die Folie besteht aus einem hochisotaktischen Polypropylen und weist eine Isotaktizität von 98-99,5% und eine isotaktische Pentadfraktion von >99% auf.

In WO 97/05634 wird ein Kondensator beschrieben, dessen Dielektrikum aus einer Polypropylenfolie mit einem Elastizitätsmodul größer 1500 MPa, einer Fließtempratur oberhalb 110°C und einem Vicaterweichungspunkt größer 150°C besteht. Die Folie weist unter anderem ein verbessertes Schrumpfverhalten in Längsrichtung zwischen 100°C und 150°C auf. Das Schrumpfverhalten in Querrichtung wird nicht beschrieben.

EP 1 398 344 A1 beschreibt ein Verfahren zur Herstellung von biaxial orientierter Polypropylenfolie. Das Polypropylen besitzt eine spezielle Schmelzefestigkeit in Verbindung mit einem ausgewählten MFI. Es ist beschrieben die Folien im Verpackungsbereich einzusetzen. Andere Anwendungen sind nicht erwähnt.

Die JP 2006-63186 beschreibt Folien aus Polypropylenen mit einer engen Molekulargewichtsverteilung und hoher Isotaktizität . Nach dieser Lehre sind hochisotaktische Polyproplene mit einem Mw/Mn von <5 vorteilhaft bezüglich der Temperaturbestänidgkeit der daraus hergestellten Folie, aber die Verstreckbarkeit ist auf Grund der erhöhten Kristallinität schwierig. Zur Lösung diese Problems wird der hochisotaktische Polypropylen-Rohstoff mit einem HMS Polypropylen abgemischt. Die Vorteile des hochisotaktischen, eng verteilten Rohstoffs bleiben erhalten, die Verstreckbarkeit der Mischung ist wesentlich besser und die Folien haben eine bessere Dickengleichmäßigkeit. Des weiteren ist beschrieben, daß die Folien aus dieser Mischung eine verbesserte Durchbruchspannung haben.

EP 0909 638 beschreibt eine biaxial orientierte Polypropylenfolie mit einer Basisschicht aus Polypropylen mit einer Molekulargewichtsverteilung Mw/Mn von 2-15.

Die elektrische Durchbruchspannung ist ein wichtiges Qualitätskriterium für die Elektroisolationsfolie. Die Durchbruchspannung ist die maximale Spannung mit der der Kondensator belastet werden kann. Erreicht man die Durchbruchspannung kommt es zu Durchschlägen durch die Folie, welche die Kapazität beeinträchtigen und bis zu einem Totalausfall des Kondensators führen können. Die maximale elektrische Durchbruchspannung bei einer gegebenen Temperatur ist sowohl von der Foliendicke, als auch von der Temperaturbeständigkeit der Elektroisolierfolie abhängig. Die erreichbare Durchbruchspannung sinkt mit steigender Temperatur. Daher sind Kondensatoren auf eine bestimmte maximale Gebrauchstemperatur ausgelegt, die nicht überschritten werden soll. Bei Überschreitung der Gebrauchstemperatur kann es somit zu Ausfällen des Kondensators durch Durchschläge kommen. Diese Mängel können nach dem Stand der Technik nur durch eine erhöhte Foliendicke ausgeglichen werden, womit der Verkleinerung der Bauteile Grenzen gesetzt sind.

Die Aufgabe der vorliegenden Erfindung bestand darin, eine biaxial orientierte Polypropylenfolie zur Verfügung zu stellen, welche zu verbesserten Gebrauchseigenschaften der daraus hergestellten Kondensatoren beiträgt. Insbesondere sind die Verbesserung (Erhöhung) der elektrischen Durchbruchspannung einhergehend mit einer besseren Temperaturbeständigkeit der Kondensatoren in der Fachwelt ein ständiges Bedürfnis.

Zur Herstellung von Folienkondensatoren werden die Folien im allgemeinen zunächst metallisiert und anschließend gewickelt. Bereits die Metallisierung der Folie beinhaltet eine Temperaturbelastung, welcher die Folie standhalten muß, d.h. es darf bei der Metallisierung nicht zu Dimensionsänderungen der Folie durch Schrumpfungen kommen.

Es wurde gefunden, daß insbesondere bei sogenannten Leistungskondensatoren für Hochspannungsanwendungen lokal im Inneren des Kondensators durch fließende Ströme oder Entladungsvorgängen zwischen Folienlagen extreme Temperaturen in lokalen Bereichen auftreten können, sogenannte Hot Spot-Temperaturen. Hierbei werden nach vorliegenden Untersuchungen stellenweisen Temperaturen von deutlich über 120°C bis zu 140 °C erreicht. Somit ist die Folie sowohl während der Verarbeitung zum metallisierten Wickel als auch während des Gebrauchs des Kondensators häufig erhöhten Temperaturen ausgesetzt.

Diese vorstehend formulierte Aufgabe wird erfindungsgemäß durch eine mehrschichtige biaxial orientierte Elektroisolierfolie gelöst, die aus einer Basisschicht und mindestens einer Deckschicht aufgebaut ist, wobei die Basisschicht eine Mischung aus einem Polypropylen P1 und einem davon verschiedenen Polypropylen P2 enthält, wobei das Polypropylen P1 ein lineares Polypropylen ist und ein Mw/Mn >5 und eine Mesopentaden-Isotaxie von mindestens 95% aufweist und das Polypropylen P2 eine Langkettenverzweigung aufweist.

Die Basisschicht der Folie enthält erfindungsgemäß eine Mischung aus mindestens zwei verschiedenen Polymeren P1 und P2 und gegebenenfalls übliche Additive in geringen Mengen, wie beispielsweise Stabilisatoren und Neutralisationsmittel. Die erste Komponente P1 ist ein Polypropylen, welches auf Grund seiner besonderen Reinheit (niedriger Asche- und Chlorgehalt) zur Herstellung von Elektroisolierfolien geeignet ist. Dieses Polypropylen zeichnet sind durch eine breite Molekulargewichtsverteilung in Verbindung mit einer hohen Isotaktizität aus. Strukturell weist dieses Material eine lineare Kettenstruktur auf, wie sie normalerweise bei Polypropylenen für Folien üblich ist. Die zweite Komponente ist ein Propylenpolymeres P2, welches von P1 strukturell verschieden ist und eine Langkettenverzweigung aufweist.

Die Basisschicht enthält im allgemeinen mindestens 95-100 Gew.-%, vorzugsweise 98 bis <100 Gew.-%, jeweils bezo-gen auf die Basisschicht, der nachstehend beschriebenen Polymermischung. Die Zusammensetzung der Mischung kann grundsätzlich in einem breiten Bereich variieren. Im allgemeinen ist es bevorzugt, daß das Polymere P1 die Hauptkomponente der Mischung bildet, d.h. der P1- Anteil ist >50 bis < 100 Gew-%, P2 entsprechend <50 bis >0 Gew.-%, jeweils bezogen auf das Gewicht der Mischung. Bevorzugt sind Mischungen, welche aus 70 - 99 Gew.-% P1 und 1 - 30 Gew.-% P2, vorzugsweise 80 - 98 Gew.-% P1 und 2-20 Gew.-% P2, bestehen. Insbesondere sind Mischungen mit 90-97Gew.-% P1 und 3 - 10 Gew.-% P2 geeignet.

Als Propylenpolymer P1 der Mischung sind alle üblichen Polypropylenrohstoffe einsetzbar, die üblicherweise zur Herstellung von Elektroisolierfolien verwendet werden, soweit sie die Molekulargewichtsverteilung mit einem Mw/Mn >5 und eine Mesopentaden Isotaxie von zumindest 95% erfüllen. Das Propylenpolymere P1 enthält mindestens 98 bis 100 Gew.-%, insbesondere 99 bis 100 Gew.-%, Propylen. Der entsprechende Comonomergehalt von höchstens 2 Gew.-% bzw. insbesondere 0 bis 1 Gew.-% besteht, wenn vorhanden, im allgemeinen aus Ethylen. Die Angaben in Gew.-% beziehen sich jeweils auf das Propylenpolymere. Propylenhomopolymere sind bevorzugt.

Das Propylenhomopolymere P1 hat erfindungsgemäß ein Mw/Mn von >5, vorzugsweise von >5 bis 12, insbesondere von 5,5 bis 10. Mw/Mn ist ein Wert für die Molekulargewichtsverteilung (bestimmt mittels GPC) des Propylenpolymeren ausgedrückt als Verhältnis des Gewichts-mittels M_{w} zum Zahlenmittel Mₙ. Die Mesopentadenisotaxie beträgt bevorzugt 95 - 99,8%, insbesondere 96,5 - 99,5%. Überraschenderweise verbessert sich die Temperaturbeständigkeit der Durchbruchspannung der Folien durch Zumischung von langkettenverzweigten P2 Polymeren zu einem breitverteilten Polymeren, wenn die Isotaxie des breitverteilten Polymeren P1 einen Mindestwert von mindestens 95% aufweist. Es wurde ursprünglich erwartet, daß die breite Verteilung des Polymeren P1 diese Temperaturbeständigkeit soweit beeinträchtigen würde, daß der Zusatz von langkettenverzweigten Polymeren P2 diese Beeinträchtigung nicht mehr kompensieren kann. Überraschenderweise bringt der besagte Zusatz jedoch die gewünschte Verbesserung auch bei Abmischung mit einem breit verteilten Polypropylen, wenn gleichzeitig eine hohe Isotaxie gegeben ist. Liegt die Isotaxie des breitverteilten Polymeren unter 95% wird keine Verbesserung der Durchbruchspannung durch den Zusatz des langkettenverzweigten Polymeren P2 festgestellt.

Das Polypropylen P1 der Basisschicht hat im allgemeinen einen Schmelzpunkt von 155 bis 170 °C, vorzugsweise von 160 bis 167 °C, und einen Schmelzflußindex (Messung ISO 1133 bei 2,16 kg Belastung und 230 °C) von 0,7 bis 15 g/10 min, vorzugsweise von 1,0 bis 8,0 g/10 min. Der n-hepanlösliche Anteil des Polymeren P1 beträgt im allgemeinen 0,2 bis 4 Gew.-%, vorzugsweise 1 bis 2 Gew.-% bezogen auf das Aus-gangs-polymere, entsprechend einem isotaktischen Anteil (wobei hierfür der n-heptan unlösliche Anteil als isotaktischer Anteil angenommen wird) von 96 bis 99,9%, vorzugsweise 97 bis 99,8%. Das mittlere Molekulargewicht Mw (Gewichtsmittel) des Polymeren P1, bestimmt mittels GPC, liegt im Bereich von 200.000 und 800.000, vorzugsweise 400.000 bis 650.000.

Der mittels ¹³C-NMR-Spektroskopie bestimmte Kettenisotaxie-Index (Triadenmethode, Nachstehend "Triadenwert") des Propylenhomo-polymeren P1 beträgt >95%, bevorzugt von >95 - 99,9 % vorzugsweise >97 bis 99,5 %.

Das Polymere P1 ist strukturell verschieden vom Polymeren P2. Es hat eine lineare Struktur im Gegensatz zu der Struktur mit Kettenverzweigungen des Polymeren P2. Daher ist der Verzweigungsindex von P1 1.

Im Hinblick auf den vorgesehenen Verwendungszweck der erfindungsgemäßen Folie als Kondensatorfolie soll das Propylenhomopolymer P1 einen Aschegehalt von < 50 ppm, vorzugsweise zwischen 10 und 40 ppm, und einen Chlorgehalt von maximal 10 ppm, vorzugsweise >0 - 5 ppm aufweisen.

Die Propylenpolymeren P2 der Mischung zeichnen sich durch eine spezielle langkettenverzweigte Struktur aus. Das Propylenpolymere P2 enthält mindestens 98 bis 100 Gew.-%, insbesondere 99 bis 100 Gew.-%, Propyleneinheiten. Der entsprechende Comonomergehalt von höchstens 2 Gew.-% bzw. insbesondere 0 bis 1 Gew.-% besteht, wenn vorhanden, im allgemeinen aus Ethyleneinheiten. Die Angaben in Gew.-% beziehen sich jeweils auf das Propylenpolymere. Propylenhomopolymere sind bevorzugt.

Das Propylenpolymere P2 hat im allgemeinen einen Schmelzpunkt von 155 bis 170 °C, vorzugs-weise von 160 bis 167 °C, und einen Schmelzflußindex (Messung ISO 1133 bei 2,16 kg Belastung und 230 °C) von 0,7 bis 20 g/10 min, vorzugsweise von 1,5 bis 15 g/10 min. Der n-heptanlösliche Anteil beträgt im allgemeinen 1 bis 3 Gew.-%, vorzugsweise 1 bis 2 Gew.-% bezogen auf das Ausgangspolymere, entsprechend einem isotaktischen Anteil von 97 bis 99%, vorzugsweise 98 bis 99%. Das mittlere Molekulargewicht Mw (Gewichtsmittel) des P2, bestimmt mittels GPC, liegt im Bereich von 200.000 und 800.000, vorzugsweise 400.000 bis 650.000. Die Molekulargewichtsverteilung (bestimmt mittels GPC) des Propylenpolymeren P2 ausgedrückt als Verhältnis des Gewichts-mittels M_{w} zum Zahlenmittel Mₙ liegt im allgemeinen zwischen 2 und 11, vorzugsweise zwischen 5 und 10.

Der mittels ¹³C-NMR-Spektroskopie bestimmte Kettenisotaxie-Index (Triadenmethode, Nachstehend "Triadenwert") des Propylenpolymeren P2 beträgt mindestens 92 bis 99 %, vorzugsweise 93 bis 98 %. Somit können für die Zwecke der Erfindung sowohl hochisotaktische Propylenpolymere P2 mit einem Triadenwert von 95 - 99% eingesetzt werden, als auch Propylenpolymere mit geringeren Isotaxiewerten, bei denen der Triadenwert im Bereich von 92 - <95% liegt.

Im Hinblick auf den vorgesehenen Verwendungszweck der erfindungsgemäßen Folie als Kondensatorfolie soll auch das Propylenpolymere P2 einen Aschegehalt von < 50 ppm, vorzugsweise zwischen 10 und 40 ppm, und einen Chlorgehalt von maximal 10 ppm, vorzugsweise >0 - 5 ppm aufweisen, wobei gegebenenfalls auch höhere Verunreinigungen in Kauf genommen werden können, wenn P2 in vergleichsweise geringen Mengen zugesetzt wird. Grundsätzlich sollten die Verunreinigungen der einzelnen Komponenten so liegen, daß die Mischung aus P1 und P2 die genannten Obergrenzen für den Aschegehalt von <50ppm und Chlorgehalt von maximal 10 ppm nicht überschreitet.

Erfindungsgemäß ist das langkettenverzweigte P2 durch eine spezielle Struktur gekennzeichnet, d.h. es weist Langkettenverzweigungen auf. Das Ausmaß der Verzweigung wird unter Verwendung des gewichtsmittleren Verzweigungsindex g' des verzweigten Polymers bestimmt. Der gewichtsmittlere Verzweigungsindex g' ist definiert als g' = [IV]_{br}/[IV]ₗᵢₙ |M_{w} , worin g' für den gewichtsmittleren Verzweigungsindex steht, [IV]_{br} für die Grenzviskosität des verzweigten Polypropylens steht und [IV]ₗᵢₙ für die Grenzviskosität des linearen Polypropylens mit dem gleichen gewichtsmittleren Molekulargewicht wie das verzweigte Polypropylen steht. Es ist in der Technik gut bekannt, daß mit abnehmendem g'-Wert die Verzweigung zunimmt. Siehe B.H. Zimm und W.H. Stockmayer, J. Chem. Phys. 17, 1301 (1949).

In der Regel liegt der Verzweigungsindex g' des für die vorliegende Erfindung verwendeten Propylenpolymers P2 im Bereich von 0,60 bis 0,90. Vorzugsweise beträgt der Verzweigungsindex g' des für die erfindungsgemäßen Folien verwendeten Propylenpolymers P 2 weniger als 0,88, besonders bevorzugt weniger als 0,85 und ganz besonders bevorzugt weniger als 0,80.

Herstellung von Propylenpolymeren P2 mit g' ≤ 0,90

Die Propylenpolymeren P2 sind nach einer Reihe von Verfahren erhältlich, z.B. durch Behandlung des linearen Propylenpolymers mit thermisch zerfallenden Radikalbildnern und/oder durch Behandlung mit ionisierender Strahlung, wobei beide Verfahren gegebenenfalls von einer Behandlung mit bi- oder multifunktionellen ethylenisch ungesättigten Monomeren, z.B. Butadien, Isopren, Dimethylbutadien, Divinylbenzol oder Trivinylbenzol, begleitet oder gefolgt werden können. Weitere Verfahren können zur Herstellung des Propylenpolymers P2 geeignet sein, vorausgesetzt, daß das erhaltene Propylenpolymer P2 die hinsichtlich g' geforderten Eigenschaften besitzt. Langkettenverzweigtes Polypropylen kann etwa auch durch Polymerisation unter Verwendung von Metallocen Katalysatoren erhalten werden.

Im Rahmen der vorliegenden Erfindung ist unter "bifunktionell ethylenisch ungesättigt" oder "bifunktionell" das Vorliegen zweier nichtaromatischer Doppelbindungen zu verstehen, wie z.B. in Divinylbenzol oder Cyclopentadien. Es werden nur solche bifunktionellen ethylenisch ungesättigten Verbindungen verwendet, die mit Hilfe von freien Radikalen polymerisierbar sind. Das bifunktionelle ungesättigte Monomer ist in seinem chemisch gebundenen Zustand nicht wirklich "ungesättigt", da die beiden Doppelbindungen jeweils für eine kovalente Bindung an die Polymerketten des linearen Polypropylens verwendet werden.

Beispiele für Verfahren, mit denen Propylenpolymere mit g' ≤ 0,90 erhältlich sind, sind insbesondere:

durch Umsetzung mit Bismaleinimidoverbindungen in der Schmelze modifizierte Polypropylene (EP 0 574 801 und EP 0 574 804)

durch Behandlung mit ionisierender Strahlung modifizierte Polypropylene (EP 0 190 889 A2)

durch Behandlung mit Peroxiden in fester Phase (EP 0 384 431 A2) bzw. in der Schmelze (EP 0 142 724 A2) modifizierte Polypropylene

durch Behandlung mit bifunktionellen ethylenisch ungesättigten Monomeren unter Einwirkung ionisierender Strahlung modifizierte Polypropylene (EP 0 678 527)

durch Behandlung mit bifunktionellen ethylenisch ungesättigten Monomeren in Gegenwart von Peroxiden in der Schmelze modifizierte Polypropylene (EP 0 688 817 und EP 0 450 342).

In der Regel werden Propylenpolymere P2 mit Langkettenverzweigungen ausgehend von linearen Propylenpolymeren hergestellt.

Nach einer bevorzugten Ausführungsform erfolgt die Herstellung des Propylenpolymers mit Langkettenverzweigungen vorzugsweise durch Mischen des linearen Propylenpolymers in Teilchenform, mit einer wirksamen Menge eines organischen Peroxids bei einer Temperatur von 30-100°C. Das Peroxid muß bei höheren Temperaturen zersetzbar sein und dient als Radikalbildner. Bevorzugte Peroxide sind Acylperoxide, Alkylperoxide, Hydroperoxide, Perester und/oder Peroxycarbonate. Die Peroxide können in reiner Form oder in Lösung in einem organischen Lösungsmittel oder in Form eines Master-batch eingesetzt werden. Vorzugsweise beträgt die Peroxidmenge 0,05 bis 3 Gew.-%, bezogen auf das Gewicht des Polymers.

Flüchtige bifunktionelle ethylenisch ungesättigte Monomere werden bei Temperaturen von 20-120°C und vorzugsweise 70-90°C von dem teilchenförmigen Polymer aus der Gasphase absorbiert. Die Menge an bifunktionell ungesättigtem Monomer beträgt vorzugsweise 0,01 bis 10 Gew.-% und besonders bevorzugt 0,05 bis 2 Gew.-%, bezogen auf das Gewicht des Polymers.

Die das Peroxid und die bifunktionellen Monomere enthaltende Mischung wird auf eine Temperatur von bis zu 210°C erhitzt und aufgeschmolzen, vorzugsweise in einer Inertgas und/oder flüchtiges bifunktionelles Monomer enthaltenden Atmosphäre. Das Peroxid zerfällt, und es laufen Reaktionen zwischen den entstandenen Radikalen, den Polymerketten und den bifunktionellen Monomeren ab.

Schließlich wird die Schmelze zur Entfernung von nicht umgesetzten Monomeren und Zerfallsprodukten auf 220-250°C erhitzt. Die Erhitzungs- und Aufschmelzschritte werden vorzugsweise in kontinuierlich arbeitenden Knetern oder Extrudern, vorzugsweise in Doppelschneckenextrudern, durchgeführt.

Das schmelzflüssige Propylenpolymer mit Langketten-verzweigungen wird dann abgekühlt und granuliert.

Die mittlere Sorptionszeit der flüchtigen bifunktionellen Monomere an dem teilchenförmigen Polymer beträgt vorteilhafterweise 10 bis 1000 Sekunden, vorzugsweise 20 bis 800 Sekunden und besonders bevorzugt 60 bis 600 Sekunden.

Beispiele für geeignete organische Peroxide sind:

Acylperoxide, wie Benzoylperoxid, 4-Chlorbenzoyl-peroxid, 3-Methoxybenzoylperoxid und/oder Methyl-benzoyl-peroxid;

Alkylperoxide, wie Allyl-tert.-butylperoxid, 2,2-Bis(tert.-butylperoxybutan), 1,1-Bis-(tert.-butylperoxy)-3,3,5-trimethylcyclohexan, n-Butyl-4,4-bis(tert.-butylperoxy)valerat, Diisopropyl-amino-methyl-tert.-amylperoxid, Dimethyl-amino-methyl-tert.-amylperoxid, Diethylaminomethyl-tert.-butylperoxid, Dimethylaminomethyl-tert.-butylperoxid, 1,1-Di(tert.-amylperoxy)cyclohexan, tert.-Amylperoxid, tert.-Butylcumylperoxid, tert.-Butylperoxid, und/oder 1-Hydroxybutyl-n-butylperoxid;

Perester und Peroxycarbonate, wie Butylperacetat, Cumylperacetat, Cumylperpropionat, Cyclohexylperacetat, Di-tert.-butylperadipat, Di-tert.-butylperazelat, Di-tert.-butylperglutarat, Di-tert.-butylperphthalat, Di-tert.-butylpersebazat, 4-Nitrocumylperpropionat, 1-Phenylethylperbenzoat, Phenylethylnitroperbenzoat, tert.-Butylbicyclo(2.2.1)heptanpercarboxylat, tert.-Butyl-4-carbo-methoxyperbutyrat, tert.-Butylcyclobutan-per-carboxylat, tert.Butylcyclohexylperoxycarboxylat, tert.-Butylcyclopentylpercarboxylat, tert.-Butylcyclopropanpercarboxylat, tert.-Butyldimethyl-per-cinnamat, tert.-Butyl-2-(2,2-diphenylvinyl)-perbenzoat, tert.-But yl-4-methoxyperbenzoat, tert.-Butyl-perbenzoat, tert.-Butylcarboxycyclohexan, tert.-Butylpernaphthoat, tert.-Butylperoxy-isopropyl-carbonat, tert.-Butylpertoluat, tert.-Butyl-1-phenylcyclopropylpercarboxylat, tert.-Butyl-2-propylperpenten-2-oat, tert.-Butyl-1-methylcyclopropylpercarboxylat, tert.-Butyl-4-nitro-phenylperacetat, tert.-Butylnitrophenylperoxycarbamat, tert.-Butyl-N-succinimidopercarboxylat, tert.-Butylpercrotonat, tert.-Butylpermaleinsäure, tert.-Butylpermethacrylat, tert.-Butylperoctoat, tert.-Butylperoxy-isopropylcarbonat, tert.-Butylperisobutyrat, tert.-Butylperacrylat und/oder tert.-Butylperpropionat;

und Mischungen dieser Peroxide.

Flüchtige bifunktionelle Monomere, die vorzugsweise für die Herstellung des Propylenpolymers mit Langkettenverzweigungen verwendet werden, sind u.a.:

Divinylverbindungen, wie Divinylanilin, m-Divinylbenzol, p-Divinylbenzol, Divinylpentan und/oder Divinylpropan;

Allylverbindungen, wie Allylacrylat, Allylmethacrylat, Allylmethylmaleat und/oder Allylvinylether;

Diene, wie Butadien, Chloropren, Cyclohexadien, Cyclopentadien, 2,3-Dimethylbutadien, Heptadien, Hexadien, Isopren, und/oder 1,4-Pentadien;

und Mischungen dieser Monomere.

Besonders bevorzugt sind Butadien, Isopren, Dimethylbutadien und Divinylbenzol.

Im Rahmen der vorliegenden Erfindung wurde gefunden, daß die Einmischung des Polymeren P2 in das Polymere P1 überraschend zur Verbesserung der elektrischen Durchbruchspannung beiträgt, obwohl das Polymere P1 eine vergleichsweise breite Molekulargewichtsverteilung aufweist. Folien mit einer Basisschicht aus der erfindungsgemäßen Polymermischung sind hervorragend als Kondensatorfolien geeignet. Gegenüber bekannten Kondensatorfolien aus üblichem Polypropylen zeigen die erfindungsgemäßen Folien eine höhere elektrische Durchbruchspannung, die auch bei erhöhten Temperaturen sehr stabil bleibt und deutlich höher liegt als bei den Kondensatorfolien nach dem Stand der Technik.

Die Basisschicht enthält im allgemeinen 95-100 Gew.-% der vorstehend beschriebenen Mischung, insbesondere 98 - <100 Gew.-%, jeweils bezogen auf das Gewicht der Basisschicht, sowie gegebenenfalls üblich Additive in jeweils wirksamen Mengen, beispielsweise Neutralisationsmittel und Stabilisatoren. Im Verpackungsfolienbereich übliche Additive wie Antiblockmittel, Antistatika, Gleitmittel und Pigmente werden im allgemeinen in Hinblick auf die Verwendung als Kondensatorfolie nicht zugesetzt.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,05 bis 0,6 Gew.-%, insbesondere 0,1 bis 0,5 Gew.-%, und mit einer Molmasse von mehr als 500 g/mol bevorzugt. Pentaerythrityl-Tetrakis-3-(3,5-di-Tertiärbutyl-4-Hydroxyphenyl)-Propio-n at (Irganox 1010) oder 1,3,5-Trimethyl-2,4,6-tris(3,5-di-Tertiärbutyl-4-Hydroxy-benzyl)benzol (Irganox 1330) oder 3,5-di-tert-butyl-4-hydroxytoluol (BHT) sind besonders vorteilhaft.

Neutralisationsmittel ist vorzugsweise Calciumstearat, wobei gegebenenfalls auch andere übliche Neutralisationsmittel eingesetzt werden können, die die dielektrischen Eigenschaften der Folie nicht beeinträchtigen. Neutralisationsmittel sind im allgemeinen in einer Menge von 0,001 bis 0,5 Gew.-%, vorzugsweise zwischen 0,005 und 0,1 Gew.-% zugesetzt. Die Angaben in Gew.-% beziehen sich jeweils auf das Gewicht der Basisschicht.

Die erfindungsgemäße Polypropylenfolie umfaßt mindestens eine gegebenenfalls beidseitig Deckschicht/en aus Polypropylen, die im allgemeinen mindestens 95 Gew.-%, vorzugsweise 99 bis 100 Gew.-%, jeweils bezogen auf die Deckschicht, eines Propylenpolymeren oder die erfindungsgemäße Mischung enthält/enthalten.

In einigen Anwendungen werden Kondensatoren flachgepreßt, um einen platzsparenden Einbau zu ermöglichen. In diesem Bereich sind Elektroisolierfolien mit erhöhten Oberflächerauheiten wünschenswert, um einen guten Aufbau des Wickels zu gewährleisten. In diesen Anwendungen sind daher solche erfindungsgemäßen Folien bevorzugt, welche ein- oder beidseitig Deckschichten aufweisen, welche im wesentlichen nur aus Propylenpolymeren aufgebaut sind, die dem vorstehend beschriebenen P1 entsprechen. Diese Ausführungsformen weisen daher 95 bis <100 Gew.-%, bezogen auf das Gewicht der Deckschicht, des vorstehend beschriebenen Propylenpolymeren P1, sowie gegebenenfalls Stabilisatoren und Neutralisationsmittel auf.

In einer weiteren Ausführungsform kann das Polypropylen der Deckschicht/en auch ein Mw/Mn von <5 und/oder eine Mesopentaden Isotaxie von <95% aufweisen, d.h. diesbezüglich von P1 verschieden sein. In diesem Fall sind für das Polypropylen Mw/Mn-Werte von 1 bis 4 und/oder Isotaxiewerte von 95 bis 98% bevorzugt. Im übrigen entsprechen die Eigenschaften und die Struktur dem Propylenpolymer P1. Überraschenderweise, zeigen diese mehrschichtigen Folien eine verbesserte Durchbruchspannung, obwohl das die Temperaturstabilität verbessernde Polymer P2 nur in der Basisschicht der Folie eingesetzt wird.

In einer weiteren Ausführungsform weist die Folie ein- oder beidseitig Deckschichten aus der vorstehend beschriebenen Mischung aus P1 und P2 auf, d.h. die Deckschichten enthalten 95-100 Gew.-% der vorstehend für die Basisschicht beschriebenen Mischung. Diese Ausführungsformen zeichnen sich durch eine geringere Trübung und eine vergleichsweise glatte Oberfläche aus und sind gleichermaßen gut für die erfindungsgemäße Kondensatoranwendung geeignet.

Gegebenenfalls können der/den Deckschicht/en die vorstehend für die Basis-schicht beschriebenen Neutralisationsmittel und/oder Stabilisatoren zugesetzt werden. Auch die Deckschichten enthalten in einer bevorzugten Ausführungsform keine üblichen Additive wie Antiblockmittel, Antistatika, Gleitmittel und Pigmente im Hinblick auf die Verwendung als Kondensatorfolie.

Die Dicke der Deckschicht/en ist größer als 0,1 µm und liegt vorzugsweise im Bereich von 0,3 bis 5 µm, insbesondere 0,4 bis 3 µm, wobei beidseitige Deck-schichten gleich oder ver-schie-den dick sein können.

Die Gesamtdicke der erfindungsgemäßen Polypropylenfolie kann in-ner-halb weiter Grenzen variieren und richtet sich nach dem beabsichtigten Einsatz. Sie beträgt vorzugsweise 1 bis 20 µm, vorzugsweise 2,5 bis 15 µm, wobei die Basis-schicht etwa 40 bis 100 % der Gesamtdicke aus-macht. Es wurde gefunden, dass aus der erfindungsgemäßen Mischungen Dünnstfolien mit Dicken von <5µm, vorzugsweise <3µm besonders vorteilhaft hergestellt werden können. Die verbesserte Durchbruchspannung ermöglicht es die Dicke der Folie bei gleichbleibender elektrischer Belastbarkeit weiter zu reduzieren. Damit wird die Miniaturisierung von Kondensator-Bauteilen weiter vorangetrieben. In Anwendungen mit üblichen Dicken bietet die erhöhte Durchbruchspannung gleichfalls wichtige Vorteile.

Die Erfindung betrifft weiterhin ein Verfahren zur Herstellung der erfindungsgemäßen Polypropylenfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Metallisierung vorgesehenen Oberflächenschicht/en corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Grundsätzlich ist auch eine simultane Streckung in Längs- und Querrichtung möglich.

Zunächst wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Die Längsstreckverhältnisse liegen im Bereich von 3,0 bis 8,0 vorzugsweise 4,0 bis 6,5. Die Querstreckverhältnisse liegen im Bereich von 6,0 bis 10,0, vorzugsweise zwischen 7 und 9,5.

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heiz- und Kühlkreislauf bei einer Temperatur von 30 bis 120 °C, vorzugsweise zwischen 60 und 100 °C, zu halten. Die erhöhten Abzugswalzentemperaturen begünstigen die Bildung von ß-Sphäroliten in der Vorfolie. Diese ß-Sphärolite erzeugen die für Elektrofolien gewünschte verfahrensbedingte Oberflächen-rauheit, wie in EP-A-0 497 160 beschrieben.

Bevor die so abgekühlte Vorfolie in das Längsstreckwerk geführt wird, wird sie üblicherweise bei einer Temperatur von 110 - 160°C, vorzugsweise bei 120 - 150°C vorgeheizt. Diese Vorheizung kann mittels geheizter Walzen erfolgen, grundsätzlich jedoch auch mit anderen gängigen Verfahren wie beispielsweise IR-Strahler, beheizte Luft etc.

Die Temperaturen, bei denen Längs- und Querstreckung durchgeführt werden, richten sich nach den gewünschten Eigenschaften, insbesondere der zu erzeugenden Oberflächenrauheit der Folie. Im allgemeinen wird die Längs-stre-ckung bei 120 bis 160 °C, vorzugsweise 130 - 160°C und die Querstreckung bei 140 bis 180 °C , vorzugsweise 150 - 170°C durchgeführt.

Bevorzugt wird/werden nach der biaxialen Streckung eine oder beide Oberfläche/n der Folie nach einer der bekannten Methoden corona-, plasma- oder flammbehandelt. Die Behandlungsintensität liegt im allgemeinen im Bereich von 34 bis 50 mN/m, vorzugsweise 36 bis 45 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung ohne Anlegen einer Spannung, welche auch für die Vorbehandlung der Oberfläche geeignet ist.

Zur Charakterisierung der Rohstoffe und der Folien wurden die folgenden Meßmethoden benutzt:

Schmelzflußindex

Der Schmelzflußindex wurde nach ISO 1133 bei 2,16 kg Belastung und 230 °C gemessen.

Schmelzpunkt

DSC-Messung, Maximum der Schmelzkurve, Aufheizgeschwindigkeit 10 K/min.

Schrumpf:

Die Längs- und Querschrumpfwerte beziehen sich auf die jeweilige Längenausdehnung der Folie (längs L₀ und quer Q₀) vor dem Schrumpfprozeß. Die Längsrichtung ist die Maschinenrichtung, als Querrichtung wird entsprechend die Richtung quer zum Maschinenlauf definiert. Der Probekörper von 10*10cm2 wird im Umluftofen bei der jeweiligen Temperatur (von 100 bis 140°C) über eine Dauer von 15 min geschrumpft. Anschließend werden die verbliebenen Längenausdehnungen des Probekörpers längs und quer erneut bestimmt (L₁ und Q₁). Als Schrumpf in % wird dann die Differenz der ermittelten Längenausdehnungen im Verhältnis zur ursprünglichen Länge L₀ und Q₀ mal 100 angegeben.

Längsschrumpf L_{S} [%] =(L₀-L₁)/L₀*100[%]

Querschrumpf Q_{S} [%] = (Q₀-Q₁)Q₀*100[%]

Diese Bestimmungsmethode für den Längs- und Querschrumpf entspricht DIN 40634.

Dielektrischer Verlustfaktor:

Die Messung des dielektrischen Verlustfaktors (tanα) wird nach VDE 0303, Teil 4 durchgeführt. Die Folienproben werden vor der Messung in einer Vakuumbedampfungsanlage beidseitig mit Aluminium bedampft. Die Größe der Meßfläche F (= bedampfter Fläche) richtet sich nach der Foliendicke d:

für eine Foliendicke d von ≤ 10 µm eine Fläche von 1 cm²

für eine Foliendicke d von > 10 µm eine Fläche von 5 cm²

Es wird von jedem zu prüfenden Muster eine Doppelbestimmung durchgeführt und der Mittelwert gebildet. Die Proben werden in einen Trockenschrank gelegt. Die untere Elektrodenplatte besteht aus Messing. Die obere Elektrode ist zylinderförmig und besteht ebenfalls aus Messing. Die Prüfspannung beträgt 1V. Die Messung erfolgt bei drei Frequenzen von 0,1 KHz, 1 KHz und 10 KHz.

Restaschegehalt:

Zur Messung des Restaschegehalts wird der Anteil der nicht verbrennbaren Füllstoffe quantitativ bestimmt. Der Restaschegehalt (Glühverlust) errechnet sich aus dem Ausgangsgewicht der Probe und dem Glührückstand. Das Meßergebnis wird in ppm angegeben. Aus dem zu prüfenden Material (Granulat, Regenerat usw.) wird eine repräsentative Stichprobe von ca. 1 kg entnommen. Das Material muß sauber und vollkommen trocken sein; eventuell ist ein Vortrocknen bei ca. 80°C im Umluftwärmeschrank erforderlich. Drei leere Porzellantiegel werden mindestens 1 h lang bei einer Temperatur von 650 °C im Tiegelofen geglüht und nach Abkühlung im Exsikkator auf Raumtemperatur auf 0,1 mg Genauigkeit gewogen. Das Glühen wird wiederholt, bis zwischen zwei aufeinanderfolgenden Wägungen Gewichtskonstanz erreicht ist. Danach wird in jeden Tiegel 50 g (±0,1 g) Material eingewogen und in den 650°C heißen Muffelofen gegeben. Die Temperatur im Ofen wird jetzt auf 1 000°C hoch-gefahren und bei dieser Temperatur mindestens 1 h geglüht. Nach Abkühlung der Tiegel im Exsikkator werden diese auf 0,1 mg Genauigkeit ausgewogen. Der Aschegehalt wird in Maßeinheit ppm (parts per million) = mg/m³ angegeben. Alle drei Tiegel werden nach der folgenden Formel ausgewertet, und die beiden am wenigsten differierenden Werte zu einem Mittelwert zusammengefaßt:

ppm = Auswaage (g)/Einwaage (g) x 1 000 000

Chlorgehalt

Der Chlorgehalt in Polyolefinen wird quantitativ mittels Röntgen-Fluoreszenz-Analyse (RFA) nach DIN 51 001, Teil 1, gemessen. Es wird eine Tablette aus Granulat/Pulver gepreßt, die mit der RFA gegen eine Kalibrierkurve vermessen wird. Die Kalibrierkurve wurde mit Hilfe von 10 Kalibrierproben aufgestellt, in denen der Chlorgehalt nach einer unabhängigen Methode (naßtechnisch) bestimmt wurde. (Werte für den Chlorgehalt von unterhalb 5ppm werden aus Genauigkeitsgründen numerisch nicht angegeben, Angabe < 5ppm).

Grenzviskosität

Die Bestimmung der Grenzviskosität erfolgte nach ISO 1628-3 in Dekalin bei 135°C.

Molekulargewichtsbestimmung

Die mittlere Molmasse und die mittlere Molmassen-Dispersität wurden in Anleh-nung an DIN 55 672, Teil 1, mittels Gelpermeationschromatographie bestimmt. Anstelle von THF wurde als Elutionsmittel Orthodichlorbenzol verwendet. Da die zu untersuchenden Homopolymeren bei Raumtemperatur nicht löslich sind, wird die gesamte Messung bei erhöhter Temperatur (bei 135°C) durchgeführt.

Isotaktischer Anteil

Der isotaktische Anteil des Homopolymeren kann in Näherung durch die unlösliche Fraktion des Rohstoffes in n-Heptan charakterisiert werden. Üblicherweise führt man eine Soxlet-Extraktion mit siedendem n-Heptan durch, wobei es zweckmäßig ist, das Soxlet anstelle von Granulat mit einem Preßling zu befüllen. Die Dicke des Preßlings sollte hierbei 500 Mikrometer nicht übersteigen. Für die quantitative Erfassung des n-heptan unlöslichen Anteils des Homopolymeren ist es von entscheidender Bedeutung, eine ausreichende Extraktionszeit von 8 bis 24 Stunden sicherzustellen.

Die operationelle Definition des isotaktischen Anteils PPᵢₛₒ in Prozent ist gegeben durch das Verhältnis der Gewichte der getrockneten n-heptanunlöslichen Fraktion zur Einwaage:

PPᵢₛₒ = 100x (n-heptanunlösliche Fraktion/Einwaage)

Eine Analyse des getrockneten n-Heptan-Extraktes zeigt, daß dieser in der Regel nicht aus reinem ataktischen Propylenhomopolymeren besteht. Bei der Extraktion werden auch aliphatische und olefinische Oligomere, insbesondere isotaktische Oligomere sowie auch mögliche Zusatzstoffe wie z. B. hydrierte Kohlenwasserstoffharze und Wachs, miterfaßt.

Bestimmung des triadenbezogenen Kettenisotaxie - Index II (Triaden

Probenvorbereitung und Messungen

60 bis 100 mg Polypropylen werden in 10mm-NMR-Röhrchen eingewogen. Nach Zugabe eines Lösemittelgemisches aus Hexachlorbutadien (C₄Cl₆) und deuteriertem Tetrachlorethan (C₂D₂Cl₄) wird die Suspension bei ca. 140 °C so lange aufbewahrt, bis eine homogene Lösung entstanden ist. Der Lösevorgang wird durch Rühren mit einem Glasstab beschleunigt. Die Aufnahme des 13C-NMR-Spektrums erfolgt bei erhöhter Temperatur (in der Regel 373 K) unter Standardmeßbedingungen (halbquantitativ).

Auswertung des ₁₃C-NMR-Spektrums

Zur Beschreibung der Konfigurationsstatistik (Taktizität) von Polypropylen werden drei Monomereinheiten zu Triaden zusammengefaßt. Bei einer Triade wird von der mittleren Methylgruppe aus die Konfiguration der benachbarten Methylgruppen betrachtet. Haben alle drei Methylgruppen die gleiche Konfiguration, handelt es sich um eine mm-Triade.

Ist die Konfiguration der vorhergehenden und der nachfolgenden Methylgruppe gleich, aber unterschiedlich zur mittleren CH₃-Gruppe, handelt es sich um die rr-Triade.

Zwei weitere Anordnungen sind möglich, mr und rm. Sie sind allerdings nicht unterscheidbar, da beide Richtungen entlang der Polymerkette gleichwertig sind. Sie werden zur mr-Triade zusammengefaßt.

Die verschiedenen Triaden sind aufgrund ihrer unterschiedlichen chemischen Verschiebung im 13C-NMR-Spektrum unterscheidbar.

Bereich der mm-Triade ca. 20,8 - ca. 22,2 ppm

Bereich der mr-Triade ca. 20,0 - ca. 20,8 ppm

Bereich der rr-Triade ca. 19,2 - ca. 20,0 ppm

Zur Berechnung des sogenannten triadenbezogenen Kettenisotaxie-Index II werden die Intensitäten der Triaden-Signale verglichen:

II (Triaden) = (I mm + 0,5 I mr)/(I mm + I mr + Irr)_{*}100

Wobei I mm, I mr und I rr die Integrale der zugeordneten Signalgruppen sind.

Literatur:

NMR-spectroscopy and polymer microstructure von Alan E. Tonelli, 1989, VCH

Bestimmung der Mesopentaden Isotaxie (auch bezeichnet als Mesopentaden Fraktion (mmmm))

Zur Bestimmung der Mesopentaden Isotaxie wurde wie in den folgenden Veröffentlichungen vorgegangen: T. Hayashi, Y. Inoue, R. Chujo, und T. Asakura, Polymer 29 138-43 (1988), sowie Chujo R, et al, Polymer 35 339 (1994). Die C¹³ NMR Spektra wurden mit einem Bruker 400 MHz Spektrometer bei 130 °C gemessen. Die Proben waren in 1,2,4-Trichlorobenzol/Benzol-D6 (90/10 w/w) gelöst.

Die Erfindung wird nun an Hand der nachstehenden Ausführungsbeispiele erläutert:

**Beispiel 1**

Es wurde durch Extrusion und anschließende stufenweise Orientierung in Längs- und Querrichtung eine transparente einschichtige Folie mit einer Gesamtdicke von 7,0µm hergestellt. Die Schicht hatte die folgende Zusammensetzung:

ca. 95 Gew.-% hochisotaktisches Polypropylen P1 der Firma Borealis (Bezeichnung Borclean® HB 300BF)

ca. 5 Gew.-% P2 (HMS)

0,45 Gew.-% phenolischer Stabilisator Irganox 1010

0,0075 Gew.-% Neutralisationsmittel Ca-Stearat

Das hochisotaktische Polypropylen P1 hatte einen mittels ¹³ C-NMR-Spektroskopie gemessene Mesopentaden Isotaxie von 97,4 einen Chlorgehalt von <5ppm und einen Aschegehalt von 20 ppm. Der n-heptanlösliche Anteil des Polypropylens betrug 1,7% (isotaktischer Anteil PP iso 98,3%). Das mittlere Molekulargewicht Mn betrug 64.600 g/mol und Mw 392.150 g/mol (gemessen mittels GPC) entsprechend einer Molekulargewichtsverteilung Mw/Mn von 6,07. Der Schmelzflußindex MFI (230°C und 2,16kp) betrug 1,45g/10min und der Schmelzpunkt 165°C.

Herstellung von Propylenpolymer P2 mit Verzweigungsindex ≤ 0,90

In einem ersten Schritt wird in einer einstufigen Propylenpolymerisation in einem Schlaufenreaktor ein lineares Propylenpolymer hergestellt. Es wurde ein Ziegler-Natta-Katalysator verwendet; die Reaktionstemperatur beträgt 70°C. Die Konzentration von Propylen und Wasserstoff wurde so gewählt, daß sich ein MFI_{230/2,16} von 5,0 g/10 min ergab.

Aus dem obigen Polymerisationsverfahren erhaltenes Pulver wird bei 100°C 15 Minuten mit 0,25 Gew.-% tert.-Butylperoxyisopropylcarbonat und 0,5 Gew.-% Butadien beladen. Die Mischung wird unter Inertatmosphäre (Stickstoff) auf eine Temperatur von 200°C erhitzt und dann weiter auf 230°C erhitzt und danach granuliert. Das erhaltene Polymer P2 zeigt einen MFI_{230/2,16} von 7,2 g/10 min und einen Verzweigungsindex g' von 0,8.

Die Herstellungsbedingungen in den einzelnen Verfahrensschritten zur Herstellung der biaxial orientierten Folie waren:

Extrusion: Temperaturen 250 °C

Temperatur der Abzugswalze: 86 °C

Längsstreckung: Vorheiztemperatur: 136°C

Längsstrecktemperatur: 148°C

Längsstreckverhältnis: 5,0

Querstreckung: Temperatur: 163 °C

Querstreckverhältnis: 9,6

Fixierung: Temperatur: 130 °C

Konvergenz: 12,5 %

Bei dem angegebenen Querstreckverhältnis handelt es sich um einen Effektivwert. Dieser Effektivwert berechnet sich aus der Endfolienbreite, reduziert um die zweifach Saumstreifenbreite, dividiert durch die Breite der längsgestreckten Folie, welche ebenfalls um die zweifache Saumstreifenbreite reduziert wird.

**Beispiel 2:**

Es wurde eine Folie wie in Beispiel 1 beschrieben hergestellt. Es wurde nur die Zusammensetzung der Schicht geändert. Der Anteil an P2 wurde auf 10 Gew.-% bezogen auf die Schicht erhöht, der P1-Anteil betrug entsprechend 90 Gew.-%. Die Bedingungen bei der Herstellung der Folie wurden nicht geändert.

**Vergleichsbeispiel 1**

Es wurde eine Folie wie in Beispiel 1 beschrieben hergestellt. Es wurde nur die Zusammensetzung der Schicht geändert. Die Schicht bestand jetzt nur aus dem hochisotaktischen Polypropylen P1 mit Stabilisator und Neutralisationsmittel. Die Bedingungen bei der Herstellung der Folie wurden nicht geändert.

**Vergleichsbeispiel 2**

Es wurde eine Folie wie in Beispiel 1 beschrieben hergestellt. Anstelle des hochisotaktischen Polypropylen P1 mit einem Mw/Mn von 6,07 wurde ein Polypropylen mit einer Isotaxie von ca. 93% und einem Mw/Mn von ca. 6 eingesetzt. Die Mengenverhältnisse der Komponenten P1 und P2 wurden nicht geändert. Die Bedingungen bei der Herstellung der Folie wurden gleichfalls nicht geändert.

**Tabelle 1**

| BDV in V/µm | Beispiel 1 | | Beispiel 2 | | Vergleichsbeispiel | |
|---|---|---|---|---|---|---|
| Spannung Temperatur | Wechselspannung | Gleichspannung | Wechselspannung | Gleichspannung | Wechselspannung | Gleichspannung |
| 23°C | 550 | 855 | 537 | 825 | 459 | 835 |
| 100°C | 514 | 813 | 415 | 746 | 374 | 664 |
| 125°C | 356 | 734 | | | 310 | 615 |

## Patentansprüche

1. Blaxial orientierte Elektroisolierfolie, die aus einer Basisschicht und mindestens einer Deckschicht aufgebaut ist, wobei die Basisschicht eine Mischung aus einem Polypropylen P1 und einem davon verschiedenen Polypropylen P2 enthält, wobei das Polypropylen P1 ein lineares Polypropylen ist und ein Mw/Mn >5 und eine Mesopentaden-Isotaxie von mindestens 95% aufweist und das Polypropylen P2 eine Langkettenverzweigung aufweist.

2. Elektroisolierfolie gemäß Anspruch 1, **dadurch gekennzeichnet, daß** der Verzweigungsindex g' des Polypropylen P2 im Bereich von 0,6 bis 0,9 liegt.

3. Elektroisolierfolie gemäß Anspruch 1 und/oder 2, **dadurch gekennzeichnet, daß** die Basischicht 95 - 100 Gew.-% der Mischung enthält.

4. Elektrolsollerfolie gemäß einem der Anspruch 1 bis 3, **dadurch gekennzeichnet, daß** die Mischung >50 bis <100 Gew.-% P1 und >0 bis <50 Gew.-% P2 enthält.

5. Elektroisolierfolie gemäß Anspruch 4, **dadurch gekennzeichnet**, die Mischung 70 bis 99 Gew.-% P1 und 1 bis 30 Gew.-% P2 enthält.

6. Elektroisolierfolie gemäß einem der Anspruch 1 bis 5, **dadurch gekennzeichnet, daß** das Polypropylen P1 einen triadenbezogenen Kettenisotaxieindex von >95 %, bevorzugt von >95 - 99,9 % aufweist.

7. Elektroisolierfolie gemäß einem der Ansprüche 1 bis 6, **dadurch gekennzeichnet, daß** die Mischung aus P1 und P2 einen Aschegehalt von <50ppm und einen Chlorgehalt von maximal 10ppm aufweist.

8. Elektroisolierfolie gemäß Anspruch 7, **dadurch gekennzeichnet, daß** die Mischung aus P1 und P2 einen Aschegehalt von 10 bis 40ppm und einen Chlorgehalt von >0 bis 5ppm aufweist.

9. Elektroisolierfolie gemäß einem der Ansprüche 1 bis 8, **dadurch gekennzeichnet, daß** sie einseitig, vorzugsweise beidseitig eine Deckschicht aus Propylenpolymer P1 aufweist.

10. Elektroisolierfolie gemäß einem der Ansprüche 1 bis 8, **dadurch gekennzeichnet, daß** sie mindestens einseitig, vorzugsweise beidseitig, eine Deckschicht aus einer Mischung aus Propylenpolymer P1 und P2 aufweist.

11. Elektroisolierfolie nach einem der Ansprüche 1 bis 10 **dadurch gekennzeichnet, daß** die Folie ein- oder beidseitig auf ihrer Oberfläche metallisiert ist.

12. Elektroisolierfolie nach einem der Ansprüche 1 bis 12 **dadurch gekennzeichnet, daß** sie eine Dicke von höchstens 20µm aufweist.

13. Verwendung der Elektroisolierfolie gemäß einem oder mehreren Ansprüche 1 bis 12 als Dielektrikumsfolie in Kondensatoren.

14. Kondensator enthaltend eine Elektroisolierfolie gemäß einem oder mehren der Ansprüche 1 bis 13.

15. Verfahren zur Herstellung einer Elektroisolierfolie nach einem der Ansprüche 1 bis 12 nach dem coextrusions verfahren.

## Claims

1. A biaxially-oriented electrical insulating film comprising a base layer and at least one covering layer, wherein the base layer comprises a mixture of a polypropylene P1 and a different polypropylene P2, wherein polypropylene P1 is a linear polypropylene and has a Mw/Mn > 5 and a mesopentadene isotaxy of at least 95%, and polypropylene P2 has a long-chain branching.

2. The electrical insulating film as recited in claim 1, **characterized in that** the branching index g' of the polypropylene P2 is in the range of from 0.6 to 0.9.

3. The electrical insulating film as recited in claim 1 and/or 2, **characterized in that** the base layer comprises 95 to 100% by weight of the mixture.

4. The electrical insulating film as recited in any of claims 1 to 3, **characterized in that** the mixture comprises >50 to <100% by weight of P1 and >0 to <50% by weight of P2.

5. The electrical insulating film as recited in claim 4, **characterized in that** the mixture comprises 70 to 99% by weight of P1 and 1 to 30% by weight of P2.

6. The electrical insulating film as recited in any of claims 1 to 5, **characterized in that** the polypropylene P1 has a triad-related chain isotaxy index of >95%, preferably of >95 to 99.9%.

7. The electrical insulating film as recited in any of claims 1 to 6, **characterized in that** the mixture of P1 and P2 has an ash content of <50 ppm and a chlorine content of no more than 10 ppm.

8. The electrical insulating film as recited in claim 7, **characterized in that** the mixture of P1 and P2 has an ash content of 10 to 40 ppm and a chlorine content of >0 to 5 ppm.

9. The electrical insulating film as recited in any of claims 1 to 8, **characterized in that** the film has a covering layer of propylene polymer P1 on at least one side, preferably on both sides.

10. The electrical insulating film as recited in any of claims 1 to 8, **characterized in that** the film has a covering layer of a mixture of propylene polymers P1 and P2 on at least one side, preferably on both sides.

11. The electrical insulating film as recited in any of claims 1 to 10, **characterized in that** the film is metallised on its surface on one or both sides.

12. The electrical insulating film as recited in any of claims 1 to 12, **characterized in that** it has a thickness of not more than 20µm.

13. Use of the electrical insulating film as recited in one or more of claims 1 to 12 as a dielectric film in condensers.

14. A condenser containing an electrical insulating film as recited in one or more of claims 1 to 13.

15. A method for producing an electrical insulating film as recited in one or more of claims 1 to 12 according to the coextrusion method.

## Revendications

1. Film d'isolation électrique biaxialement orienté, constitué d'une couche de base et d'au moins une couche de couverture, ladite couche de base contenant un mélange d'un polypropylène P1 avec un polypropylène P2 de type différent, ledit polypropylène P1 étant un polypropylène linéaire et présentant un Mw/Mn >5 et une isotacticité en mésopentades d'au moins 95 % et ledit polypropylène P2 présentant une ramification à chaîne longue.

2. Film d'isolation électrique selon la revendication 1, **caractérisé en ce que** l'indice de ramification g' dudit polypropylène P2 est compris entre 0,6 et 0, 9.

3. Film d'isolation électrique selon les revendications 1 et/ou 2, **caractérisé en ce que** ladite couche de base contient 95 à 100 % en poids dudit mélange.

4. Film d'isolation électrique selon l'une des revendications 1 à 3, **caractérisé en ce que** ledit mélange contient >50 à <100 % en poids de P1 et <50 % en poids de P2.

5. Film d'isolation électrique selon la revendication 4, **caractérisé en ce que** ledit mélange contient 70 à 99 % en poids de P1 et 1 à 30 % en poids de P2.

6. Film d'isolation électrique selon l'une des revendications 1 à 5, **caractérisé en ce que** ledit polypropylène P1 présente un indice d'isotacticité de chaîne en triades de >95 %, de préférence compris entre >95 et 99,9 %.

7. Film d'isolation électrique selon l'une des revendications 1 à 6, **caractérisé en ce que** ledit mélange entre P1 et P2 présente une teneur en cendres de <50 ppm et une teneur en chlore inférieure ou égale à 10 ppm.

8. Film d'isolation électrique selon la revendication 7, **caractérisé en ce que** ledit mélange entre P1 et P2 présente une teneur en cendres comprise entre 10 et 40 ppm et une teneur en chlore comprise entre >0 et 5 ppm.

9. Film d'isolation électrique selon l'une des revendications 1 à 8, **caractérisé en ce qu'**il présente sur l'une de ses face, de préférence sur ses deux faces, une couche de couverture en polymère de propylène P1.

10. Film d'isolation électrique selon l'une des revendications 1 à 8, **caractérisé en ce qu'**il présente sur l'une de ses face, de préférence sur ses deux faces, une couche de couverture en un mélange entre les polymères de propylène P1 et P2.

11. Film d'isolation électrique selon l'une des revendications 1 à 10, **caractérisé en ce que** ledit Film est métallisé en surface sur l'une de ses faces ou sur ses deux faces.

12. Film d'isolation électrique selon l'une des revendications 1 à 12, **caractérisé en ce qu'**il présente une épaisseur inférieure ou égale à 20 µm.

13. Utilisation dudit film d'isolation électrique selon l'une ou plusieurs des revendications 1 à 12 en tant que film diélectrique dans des condensateurs.

14. Condensateur contenant un film d'isolation électrique selon l'une ou plusieurs des revendications 1 à 13.

15. Procédé de fabrication d'un film d'isolation électrique selon l'une des revendications 1 à 12 selon le procédé de co-extrusion.
